(19) Europäisches Patentamt

European Patent Office

Office européen des brevets

(11) EP 0 618 692 B1

(12) **EUROPÄISCHE PATENTSCHRIFT**

(45) Veröffentlichungstag und Bekanntmachung des Hinweises auf die Patenterteilung:
**25.09.1996 Patentblatt 1996/39**

(51) Int Cl.6: **H04B 10/20**, H04L 5/14

(21) Anmeldenummer: **93105294.8**

(22) Anmeldetag: **30.03.1993**

(54) **Passives optisches Telekommunikationssystem**

Passive optical telecommunicationssystem

Système passif de télécommunication optique

(84) Benannte Vertragsstaaten:
**AT BE CH DE FR GB IT LI NL SE**

(43) Veröffentlichungstag der Anmeldung:
**05.10.1994 Patentblatt 1994/40**

(73) Patentinhaber: **SIEMENS AKTIENGESELLSCHAFT**
**80333 München (DE)**

(72) Erfinder:
• **Bolze, Thomas, Dr.**
**W-8000 München 40 (DE)**
• **Neidlinger, Stephan, Dr.-Ing.**
**W-8000 München 40 (DE)**

(56) Entgegenhaltungen:
**EP-A- 0 482 943**

• **INTERNATIONAL JOURNAL OF DIGITAL AND ANALOG COMMUNICATION SYSTEMS Bd. 5, 1992, Seiten 77 - 83 MUDHAR 'A HYBRID APPROACH TO THE TRANSMISSION OF TELEPHONY OVER A PASSIVE OPTICAL NETWORK'**
• **THE INTERNATIONAL SYMPOSIUM ON SUBSCRIBER LOOPS AND SERVICES 16. September 1988, BOSTON, USA Seiten 179 - 183 OAKLEY ET. AL. 'PASSIVE FIBER LOCAL LOOP WITH BROADBAND UPGRADE'**
• **JOURNAL OF LIGHTWAVE TECHNOLOGY. Nr. 8, August 1987, NEW YORK US Seiten 1103 - 1110 DARCIE 'SUBCARRIER MULTIPLEXING FOR MULTIPLE ACCESS LIGHTWAVE NETWORKS'**

**Beschreibung**

Neuere Entwicklungen der Fernmeldetechnik führen in der Ebene der Teilnehmeranschlußleitungen zu passiven optischen Telekommunikationssystemen, in denen jeweils eine Mehrzahl von dezentralen Einrichtungen (Teilnehmerstellen oder jeweils eine Mehrzahl von Teilnehmerstellen zusammenfassende sog. Distant Units) jeweils über eine eigene Lichtwellenleiter-Anschlußleitung mit einem optischen Verzweiger verbunden ist, der direkt oder über wenigstens einen weiteren optischen Verzweiger mit einem gemeinsamen Lichtwellenleiteranschluß einer - insbesondere durch eine Vermittlungsstelle gegebenen - zentralen Einrichtung über einen Lichtwellenleiter-Bus verbunden ist (EP-A-0 171 080; ISSLS'88, Conf. Papers 9.4.1...5; BR Telecom Technol. J. 17(1989)2, 100...113).

In einem solchen passiven optischen Telekommunikationssystem kann die Signalübertragung von der zentralen Einrichtung aus zu den dezentralen Einrichtungen hin in einem TDM-Zellenstrom vor sich gehen, aus dem jede dezentrale Einrichtung nur die für ebendiese dezentrale Einrichtung bestimmten Zellen aufnimmt, und die Signalübertragung von den dezentralen Einrichtungen aus zur zentralen Einrichtung hin kann in einem TDMA-Verfahren vor sich gehen, demzufolge eine dezentrale Einrichtung einen jeden Burst mit Hilfe einer von der zentralen Einrichtung her einrichtungsindividuell eingestellten Verzögerungseinrichtung synchronisiert aussendet (DE-A1-4 016 359).

Die Signalübertragung "downstream" von der zentralen Einrichtung aus zu den dezentralen Einrichtungen hin und die Signalübertragung "upstream" von den dezentralen Einrichtungen aus zur zentralen Einrichtung hin kann dabei auch in ein- und demselben Wellenlängenfenster (z.B. Wellenlängengleichlagebetrieb bei 1,3 μm) vor sich gehen.

In diesem Zusammenhang ist (z.B. aus IEICE TRANS. COMMUN., E75-B(1992)9, 841 ... 848, oder aus J. Dig. and Anal. Commun. Sys.5(1992), 77...83) ein passives optisches Telekommunikationssystem bekannt, in dem zur Signalübertragung downstream von der zentralen Einrichtung aus zu den dezentralen Einrichtungen hin im elektrooptischen Wandler (Laserdiode) der zentralen Einrichtung das ausgesandte Licht mit einem PSK-modulierten pulsförmigen Signal intensitätsmoduliert wird und in dem zur Signalübertragung upstream von den dezentralen Einrichtungen her zur zentralen Einrichtung hin in den elektrooptischen Wandlern (Laserdioden) der dezentralen Einrichtungen das ausgesandte Licht mit einem Basisbandsignal intensitätsmoduliert wird.
Damit wird eine spektrale Trennung der Signale unterschiedlicher Übertragungsrichtung im elektrischen Teil der Empfänger möglich; Störungen durch erhöhtes Schrotrauschen, Amplitudenrauschen (RIN - Relative Intensity Noise) der Lichtquelle und einen möglichen Heterodyn-Effekt werden dabei nicht unterdrückt. Da in upstream-Richtung ein burstartiges Signal im Basisband vorliegt, werden im allgemeinen, insbesondere bei unterschiedlichen Signalpegeln der von den einzelnen dezentralen Einrichtungen her in der zentralen Einrichtung eintreffenden Signale, besondere Maßnahmen für ein schnelles, zeit- und amplitudenrichtiges Ansprechen des Empfängers der zentralen Einrichtung erforderlich, beispielsweise eine CMI-Kanalkodierung, was indessen eine erhöhte Schrittgeschwindigkeit und damit einen erhöhten Bandbreitenbedarf sowie, daraus resultierend, eine niederigere Empfängerempfindlichkeit mit sich bringt.

Die Erfindung stellt sich nun die Aufgabe, in einem Telekommunikationssystem der eingangs umrissenen Art die im vorstehenden erwähnten Nachteile zu vermeiden.

Die Erfindung betrifft ein passives optisches Telekommunikationssystem, in dem jeweils eine Mehrzahl von dezentralen Einrichtungen (Teilnehmerstellen oder jeweils eine Mehrzahl von Teilnehmerstellen zusammenfassende sog. Distant Units) jeweils über eine eigene Lichtwellenleiter-Anschlußleitung mit einem optischen Verzweiger verbunden ist, der direkt oder über wenigstens einen weiteren optischen Verzweiger mit einem gemeinsamen Lichtwellenleiteranschluß einer insbesondere durch eine Vermittlungsstelle gegebenen zentralen Einrichtung über einen Lichtwellenleiter-Bus verbunden ist, wobei die downstream-Signalübertragung von der zentralen Einrichtung aus zu den dezentralen Einrichtungen hin in einem TDM-Zellenstrom vor sich geht, aus dem jede dezentrale Einrichtung nur die für ebendiese dezentrale Einrichtung bestimmten Zellen aufnimmt, und die upstream-Signalübertragung von den dezentralen Einrichtungen aus zur zentralen Einrichtung hin im Burstbetrieb in einem TDMA-Verfahren vor sich geht; dieses Telekommunikationssystem ist erfindungsgemäß dadurch gekennzeichnet, daß zur Intensitätsmodulation des vom elektrooptischen Wandler (Laserdiode) der jeweiligen dezentralen Einrichtung bei der upstream-Signalübertragung ausgesendeten Lichts in den dezentralen Einrichtungen jeweils ein elektrisches Trägersignal vorzugsweise einer Trägerfrequenz $f_T = n \cdot f_B$, worin $f_B$ die Nutzsignal-Bitrate ist, mit dem jeweiligen quellencodierten Nutzsignal digital moduliert wird und das so modulierte elektrische Signal die Intensitätsmodulation bewirkt.

Die Erfindung ermöglicht vorteilhafterweise, unter Vermeidung der oben genannten Nachteile, bei der upstream-Übertragung von Burstsignalen empfängerseitig zum einen eine Hochpaß-Übertragung und zum andern bei entsprechend gewählter Trägerfrequenz eine einfache Taktregeneration bzw. Aufsynchronisation und macht damit ein schnelles, sowohl amplituden- als auch zeitrichtiges Ansprechen des Empfängers der zentralen Einrichtung möglich; dabei kann, wenn in weiterer Ausgestaltung der Erfindung das elektrische Trägersignal PSK-moduliert wird, prinzipiell die gleiche Empfängerempfindlichkeit wie bei (uncodierter) Basisbandübertragung erzielt werden.

Wird in weiterer Ausgestaltung der Erfindung das elektrische Trägersignal mit dem jeweiligen Nutzsignal DPSK(Differential Phase Shift Keying)-moduliert, so kann in der zentralen Einrichtung empfangsseitig auf eine Trägersynchronisation verzichtet werden, wobei sich bei einer Bitfehlerquote von $10^{-9}$ nur ein Verlust von ca. 0,5 dB ergibt.

In downstream-Richtung kann in weiterer Ausgestaltung der Erfindung das vom elektrooptischen Wandler (Laserdiode) der zentralen Einrichtung bei der downstream-Signalübertragung ausgesendete Licht von einem NRZ-Basisband-Signal intensitätsmoduliert werden, insbesondere von einem gescrambelten NRZ-Signal, um eine sichere Taktregeneration in der dezentralen Einrichtung zu gewährleisten.

Aus dem regenerierten Empfangstaktsignal der dezentralen Einrichtung kann schließlich in weiterer Ausgestaltung der Erfindung das erwähnte Trägersignal durch Frequenzvervielfachung gewonnen werden.

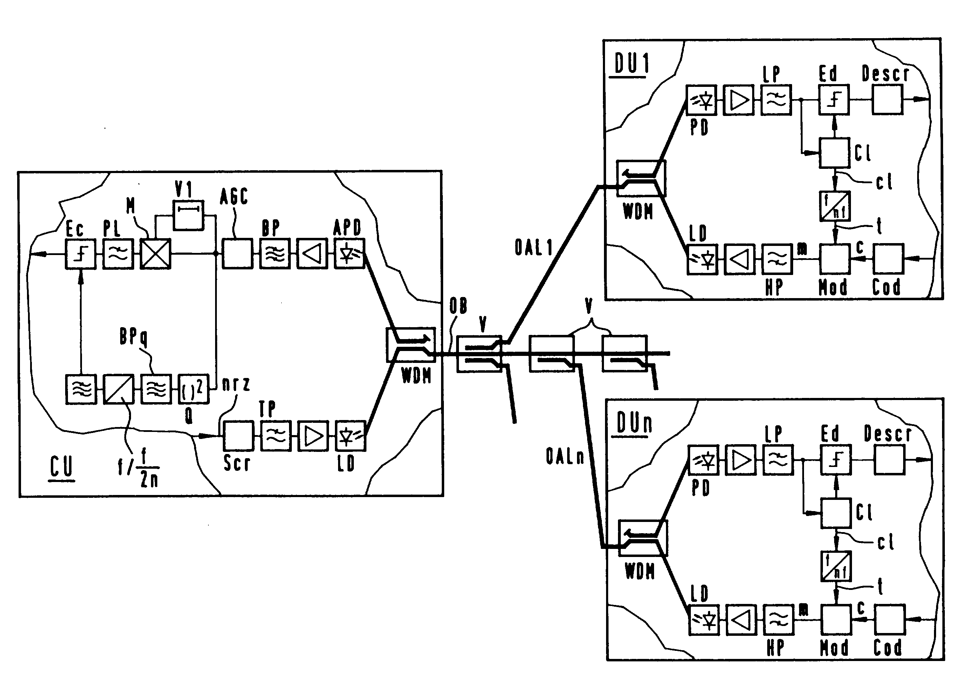

Weitere Besonderheiten der Erfindung werden aus der nachfolgenden Beschreibung anhand der Zeichnung ersichtlich, in der schematisch ein bidirektionales Lichtwellenleiter-Telekommunikationssystem gemäß der Erfindung dargestellt ist.

In dem in der Zeichnung skizzierten bidirektionalen LWL-Telekommunikationssystem erstreckt sich ein passives (vorzugsweise Monomode-)LWL-Busnetz zwischen einer zentralen Telekommunikationseinrichtung CU, bei der es sich beispielsweise um eine Vermittlungsstelle handeln kann, und einer Mehrzahl von z.B. 64 dezentralen Telekommunikationseinrichtungen DU1,...,DUn. Solche dezentralen Telekommunikationseinrichtungen können Teilnehmerstellen oder jeweils eine Mehrzahl von Teilnehmerstellen zusammenfassende sog. Distant Units sein, d.h. mit einem elektrooptischen Sendewandler LD und einem optoelektrischen Empfangswandler PD versehene Interface-Einrichtungen, die ggf. mit Hilfe eines auf der elektrischen Seite des Sende- bzw. Empfangswandlers liegenden, in der Zeichnung nicht weiter dargestellten Multiplexers bzw. Demultiplexers z.B. bis zu 32 ISDN-B-Kanäle zusammenfassen bzw. aufsplitten mögen. In diesem LWL-Telekommunikationssystem sind die dezentralen Einrichtungen DU über einen einfaserigen LWL-Bus OB mit einem gemeinsamen LWL-Multiplexanschluß der zentralen Telekommunikationseinrichtung CU verbunden; die den einzelnen dezentralen Einrichtungen DU1,...,DUn zugehörigen LWL-Anschlußleitungen OAL1,..., OALn mögen dabei über - z.B. in Kabelverzweigergehäusen untergebrachte - passive optische Verzweiger V mit dem zugehörigen LWL-Bus OB verbunden sein, und zwar entweder direkt oder auch über weitere solche Verzweiger. Als optische Verzweiger können dabei beispielsweise Durchgangsmischer oder optische Richtkoppler Anwendung finden. Wie in der Zeichnung angedeutet ist, ist es, wie dies an sich (z.B. aus EP-A-0 171 080) bekannt ist, auch möglich, einer Mehrzahl von Lichtwellenleiter-Anschlußleitungen (OAL) gemeinsame optische Verzweiger vorzusehen.

In dem in der Zeichnung skizzierten Telekommunikationssystem mögen die dezentralen Telekommunikationseinrichtungen DU1,...,DUn jeweils mit einem optoelektrischen Empfangswandler PD mit einer PIN-Fotodiode und einem elektrooptischen Sendewandler LD mit einer Laserdiode versehen sein; zur Entkopplung von elektrooptischem Sendewandler LD und optoelektrischem Empfangswandler PD und insoweit auch zur Richtungstrennung ist zwischen zugehörige Lichtwellenleiter-Anschlußleitung OAL-OB einerseits und optoelektrischen Empfangswandler PD und elektrooptischen Sendewandler LD andererseits ein Wellenlängenmultiplexer WDM eingefügt.

In den dezentralen Einrichtungen DU1,...,DUn wird zur Intensitätsmodulation des vom elektrooptischen Wandler LD der jeweiligen dezentralen Einrichtung DU zur upstream-Signalübertragung ausgesendeten Lichts ein einem Digitalmodulator Mod, vorzugsweise einem DPSK-Modulator, über eine Trägersignalleitung t zugeführtes Trägersignal mit dem jeweiligen, von einem Codierer Cod her über eine Nutzsignalleitung c dem Digitalmodulator Mod zugeführten quellencodierten Nutzsignal digital moduliert; das so modulierte elektrische Signal bewirkt dann im Ausführungsbeispiel nach Hochpaßfilterung in einem Hochpaßfilter HP und nachfolgender Verstärkung die Intensitätsmodulation des vom elektrooptischen Wandler LD ausgesendeten Lichts. Die Hochpaßfilterung bewirkt dabei eine Verringerung des in einer im optischen Netz reflektierten, zurück zum optoelektrischen Empfangswandler PD der dezentralen Einrichtung DU gelangenden Lichtwelle enthaltenen, mit der sendeseitigen Modulation beaufschlagten Störsignals.

In der umgekehrten Übertragungsrichtung wird in der zentralen Einrichtung CU zur Intensitätsmodulation des vom elektrooptischen Wandler LD der zentralen Einrichtung CU zur downstream-Übertragung ausgesendeten Lichts zweckmäßigerweise ein in Form eines NRZ(Non Return to Zero)-Basisband-Signals auftretendes Nutzsignal über eine Nutzsignalleitung nrz zunächst einem Scrambler Scr zugeführt, um dann als gescrambeltes NRZ-Signal nach Tiefpaßfilterung in einem Tiefpaßfilter TP und Verstärkung dem Modulationseingang des elektrooptischen Wandlers LD zugeführt zu werden. Die Tiefpaßfilterung bewirkt dabei eine Verringerung des in einer im optischen Netz reflektierten, zurück zum optoelektrischen Empfangswandler APD der zentralen Einrichtung CU gelangenden Lichtwelle enthaltenen, mit der sendeseitigen Modulation beaufschlagten Störsignals.

Nach der Übertragung im passiven optischen Netz OB-OAL wird in den dezentralen Einrichtungen DU1,..., DUn das in downstream-Richtung empfangene Lichtsignal im PIN-Fotodioden-Empfänger PD der jeweiligen dezentralen Einrichtung DU in ein elektrisches Signal umgesetzt; das elektrische Signal wird dann - gemäß der Zeichnung nach Verstärkung und Basisbandfilterung in einen Tiefpaßfilter LP - einem mit einem Schmitt-Trigger zu realisierenden Entscheider Ed zugeführt, wo es abgetastet und amplitudenregeneriert wird, um schließlich in einem nachfolgenden Descrambler Descr wieder entscrambelt zu werden.

Zur Abtastung des im Entscheider Ed in seiner Amplitude zu regenerierenden Empfangssignals wird der Empfangssignaltakt in einem Taktgenerator C1 regeneriert. Das am Ausgang cl des Taktgenerators C1 auftretende, regenerierte Taktsignal kann nun auch zur Erzeugung des Trägersignals für die upstream-Übertragung ausgenutzt werden. In einem Frequenzvervielfacher f/nf wird die Taktfrequenz $f_B$ ver-n-facht; am Ausgang t des Frequenzvervielfachers f/nf tritt dann das Trägersignal mit der Trägerfrequenz $f_T = n \cdot f_B$ auf. Geschieht dies in allen dezentralen Einrichtungen DU1,...,DUn, so sind die Trägerfrequenzen aller dezentraler Einrichtungen im Rahmen der Genauigkeit der Taktregeneration einander gleich. Das Trägersignal t, das für n = 2 z.B. eine Frequenz von 140 MHz und für n = 4 eine Frequenz von 280 MHz aufweisen kann, wird dann im Digitalmodulator Mod der jeweiligen dezentralen Einrichtung DU durch das Nutzsignal phasenmoduliert, und zwar vorzugsweise DPSK(Differential Phase Shift Keying)-moduliert. Da bei DPSK-Modulation die Information im Auftreten bzw. Nichtauftreten eines Phasenwechsels liegt, muß das vom Codierer Cod her über die Nutzsignalleitung c zugeführte Nutzsignal entsprechend quellencodiert sein. Das modulierte Signal bewirkt schließlich, wie oben bereits erläutert, die Intensitätsmodulation des von der betreffenden dezentralen Einrichtung DU in upstream-Richtung ausgesendeten Lichts.

Nach optischer Übertragung im passiven optischen Netz OAL-OB wird in der zentralen Einrichtung CU das in upstream-Richtung empfangene Lichtsignal in einem zweckmäßigerweise mit einer Avalanche-Fotodiode gebildeten elektrooptischen Wandler APD in ein elektrisches Signal umgesetzt, das nach Verstärkung und Durchlaufen eines Bandpaßfilters BP wieder demoduliert wird. Da HF-Demodulatoren üblicherweise bei bestimmten Pegeln arbeiten, ist bei unterschiedlichen Pegeln der von den einzelnen dezentralen Einrichtungen DU1,...,DUn her empfangenen Signalbursts eine Pegelregelung nötig. In der Zeichnung ist dazu angedeutet, daß zwischen Bandpaß BP und nachfolgender Demodulatorschaltung eine AGC(Automatic Gain Control)-Schaltung eingefügt sein kann.

Ein DPSK-Demodulator kann, wie dies auch in der Zeichnung angedeutet ist, mit einem Multiplizierer M gebildet sein, dem das zu demodulierende Signal zum einen direkt und zum andern über ein 1-bit-Verzögerungsglied V1 zugeführt wird; wie aus der Zeichnung weiter ersichtlich wird, ist dem Multiplexer M ein Tiefpaßfilter PL nachgeschaltet, das schließlich zu einem Entscheider Ec für das empfangene Signal führt.

Ist, wie oben erläutert, die Trägerfrequenz $f_T = n \cdot f_B$, worin $f_B$ die Nutzsignal-Bitrate ist, so kann in der zentralen Einrichtung CU durch Trägerrückgewinnung und Frequenzteilung das Taktsignal regeneriert und zur Zeitsteuerung des Entscheiders $E_C$ genutzt werden. In der Zeichnung ist hierzu angedeutet, daß das am Ausgang der AGC-Schaltung auftretende elektrische Empfangssignal der zentralen Einrichtung CU auch einem Quadrierer Q zugeführt wird, der ausgangsseitig über ein Bandpaßfilter BPq zu einem 1:2n-Frequenzteiler $f/\frac{f}{2n}$ führt; das frequenzuntersetzte Signal bildet dann nach erneuter Bandpaßfilterung das Taktsignal für den Amplitudenentscheider Ec der zentralen Einrichtung CU.

In einem passiven optischen Telekommunikationssystem der eingangs umrissenen Art macht eine Signalübertragung gemäß der Erfindung Bitraten von etwa 70 Mbit/s bei einem Splitting-Faktor von 64 und Anschlußlängen von 10 km möglich. Es besteht weiterhin die Möglichkeit einer elektrischen spektralen Trennung von downstream- und upstream-Signalen, was für eine bidirektionale Signalübertragung über ein und dieselbe LWL-Faser von Bedeutung sein kann. Die Erfindung ist indessen nicht auf eine bidirektionale Signalübertragung in einfaserigen Telekommunikationssystemen beschränkt, sondern bildet auch in passiven optischen Telekommunikationssystemen mit LWL-Faserpaaren für die interaktiven Dienste eine Alternative zur Kanalcodierung.

**Patentansprüche**

1. Passives optisches Telekommunikationssystem, in dem jeweils eine Mehrzahl von dezentralen Telekommunikationseinrichtungen (DU), insbesondere Teilnehmerstellen oder jeweils eine Mehrzahl von Teilnehmerstellen zusammenfassende Distant Units, jeweils über eine eigene Lichtwellenleiter-Anschlußleitung (OAL) mit einem optischen Verzweiger (V) verbunden ist, der direkt oder über wenigstens einen weiteren optischen Verzweiger (V) mit einem gemeinsamen Lichtwellenleiteranschluß einer zentralen Telekommunikationseinrichtung (CU), insbesondere einer Vermittlungsstelle, über einen Lichtwellenleiter-Bus (OB) verbunden ist, wobei die downstream-Signalübertragung von der zentralen Einrichtung (CU) aus zu den dezentralen Einrichtungen (DU) hin in einem TDM-Zellenstrom vor sich geht, aus dem jede dezentrale Einrichtung (DU) nur die für ebendiese dezentrale Einrichtung (DU) bestimmten Zellen aufnimmt, und die upstream-Signalübertragung von den dezentralen Einrichtungen (DU) aus zur zentralen Einrichtung (CU) hin im Burstbetrieb in einem TDMA-Verfahren vor sich geht,
**dadurch gekennzeichnet**, daß zur Intensitätsmodulation des vom elektrooptischen Wandler (LD) der jeweiligen dezentralen Einrichtung (DU) bei der upstream-Signalübertragung ausgesendeten Lichts in den dezentralen Einrichtungen (DU) jeweils ein elektrisches Trägersignal (t) mit dem jeweiligen quellencodierten Nutzsignal (c) digital moduliert wird und das so modulierte elektrische Signal (m) die Intensitätsmodulation bewirkt.

2. Telekommunikationssystem nach Anspruch 1, **dadurch gekennzeichnet**, daß das Trägersignal (t) eine Trägerfrequenz $f_T = n \cdot f_B$ aufweist, worin $f_B$ die Nutzsignal-Bitrate ist.

3. Telekommunikationssystem nach Anspruch 1 oder 2, **dadurch gekennzeichnet**, daß das elektrische Trägersignal (t) mit dem jeweiligen Nutzsignal (c) PSK-moduliert wird.

4. Telekommunikationssystem nach Anspruch 3, **dadurch gekennzeichnet**, daß das elektrische Trägersignal (t) mit dem jeweiligen Nutzsignal (c) DPSK(Differential Phase Shift Keying)-moduliert wird.

5. Telekommunikationssystem nach einem der Ansprüche 1 bis 4, **dadurch gekennzeichnet**, daß das modulierte elektrische Signal (m) nach einer Hochpaßfilterung die Intensitätsmodulation bewirkt.

6. Telekommunikationssystem nach einem der Ansprüche 1 bis 5, **dadurch gekennzeichnet**, daß daß das vom elektrooptischen Wandler (LD) der zentralen Einrichtung (CU) bei der downstream-Signalübertragung ausgesendete Licht von einem NRZ-Basisband-Signal intensitätsmoduliert wird.

7. Telekommunikationssystem nach Anspruch 6, **dadurch gekennzeichnet**, daß ein gescrambeltes NRZ-Signal die Intensitätsmodulation bewirkt.

8. Telekommunikationssystem nach Anspruch 6 oder 7, **dadurch gekennzeichnet**, daß das - ggf. gescrambelte - NRZ-Signal nach einer Tiefpaßfilterung die Intensitätsmodulation bewirkt.

9. Telekommunikationssystem nach einem der vorherigen Ansprüche, **dadurch gekennzeichnet**, daß das Trägersignal (t) durch Frequenzvervielfachung aus dem regenerierten Empfangstaktsignal (clock) der dezentralen Einrichtung (DU) abgeleitet wird.

## Claims

1. Passive optical telecommunication system, in which in each case a plurality of decentralized telecommunication devices (DU), preferably subscriber locations or Distant Units joining subscriber locations, is in each case connected via a dedicated optical waveguide subscriber line (OAL) to an optical brancher (V) which is connected directly or via at least one further optical brancher (V) to a common optical waveguide connection of a central telecommunication device (CU), preferably a switching centre, via an optical waveguide bus (OB), the downstream signal transmission from the central device (CU) to the decentralized devices (DU) proceeding in a TDM cell stream, from which each decentralized device (DU) accepts only the cells intended for just this decentralized device, and the upstream signal transmission from the decentralized devices (DU) to the centralized device (CU) proceeding in burst operation in a TDMA method, characterized in that, in the decentralized devices (DU), for the purpose of intensity modulation of the light which is emitted by the electro-optical converter (LD) of the respective decentralized device (DU) in the case of upstream signal transmission, in each case an electric carrier signal (t) is digitally modulated using the respective source-coded useful signal (c) and the electric signal (m) thus modulated effects the intensity modulation.

2. Telecommunication system according to Claim 1, characterized in that the carrier signal (t) has a carrier frequency $f_T = n \cdot f_B$ where $f_B$ is the useful signal bit rate.

3. Telecommunication system according to Claim 1 or 2, characterized in that the electric carrier signal (t) is PSK modulated with the respective useful signal (c).

4. Telecommunication system according to Claim 3, characterized in that the electric carrier signal (t) is DPSK (differential phase shift keying) modulated with the respective useful signal (c).

5. Telecommunication system according to one of Claims 1 to 4, characterized in that the modulated electric signal (m) effects the intensity modulation following high-pass filtering.

6. Telecommunication system according to one of Claims 1 to 5, characterized in that the light which is emitted by the electro-optical converter (LD) of the central device (CU) in the case of downstream signal transmission is intensity modulated by an NRZ baseband signal.

7. Telecommunication system according to Claim 6, characterized in that a scrambled NRZ signal effects the intensity modulation.

8. Telecommunication system according to Claim 6 or 7, characterized in that the NRZ signal - scrambled if appropriate - effects the intensity modulation following low-pass filtering.

9. Telecommunication system according to one of the preceding claims, characterized in that the carrier signal (t) is derived from the regenerated reception clock signal (clock) of the decentralized device (DU) by frequency multiplication.

## Revendications

1. Système optique passif de télécommunication, dans lequel une pluralité de dispositifs (DU) décentralisés de télécommunication, notamment des postes d'abonnés ou d'unités distantes rassemblant des postes d'abonnés sont reliées chacune par l'intermédiaire d'une ligne (OAL) de raccordement à guide d'ondes lumineuses qui leur est propre à une boîte (V) de jonction optique, qui est reliée directement ou par l'intermédiaire d'au moins une autre boîte (V) de jonction optique à un raccordement commun de guide d'ondes optiques d'un dispositif (CU) central de télécommunication, notamment d'un poste de commutation, par l'intermédiaire d'un bus (OB) à guide d'ondes optiques, la transmission de signal en aval, du dispositif (CU) central aux dispositifs (DU) décentralisés s'effectuant dans un flux de cellules à multiplexage par répartition dans le temps, duquel chaque dispositif (DU) décentralisé ne reçoit que les cellules qui lui sont destinées et la transmission de signaux en amont s'effectuant des dispositifs (DU) décentralisés vers le dispositif (CU) central, par paquets, dans un procédé d'accès multiples par répartition dans le temps, caractérisé en ce que
un signal (t) électrique porteur est modulé numériquement par le signal (c) utile codé à la source, pour moduler l'intensité de la lumière émise par le convertisseur (LD) électro-optique du dispositif (DU) décentralisé lors de la transmission en amont de signaux et le signal électrique (m) ainsi modulé provoque la modulation d'intensité.

2. Système de télécommunication suivant la revendication 1,
caractérisé en ce que,
le signal (t) porteur a une fréquence porteuse $f_T = n.f_B$, où $f_B$ est le débit binaire du signal utile.

3. Système de télécommunication suivant la revendication 1 ou 2,
caractérisé en ce que
le signal (t) électrique porteur est modulé par déplacement de phase par le signal utile (c).

4. Système de télécommunication suivant la revendication 3,
caractérisé en ce que
le signal (t) électrique porteur est modulé par déplacement de phase différentielle par le signal (c) utile.

5. Système de télécommunication suivant l'une des revendications 1 à 4,
caractérisé en ce que le signal électrique modulé (m) provoque la modulation de l'intensité après un filtrage passe-haut.

6. Système de télécommunication suivant l'une des revendications 1 à 5,
caractérisé en ce que
la lumière émise par le convertisseur (LD) électro-optique du dispositif central (CU) lors de la transmission de signaux en aval est modulée en intensité par un signal en bande de base de non retour à zéro.

7. Système de télécommunication suivant la revendication 6,
caractérisé en ce que
un signal embrouillé de non retour à zéro provoque la modulation d'intensité.

8. Système de télécommunication suivant la revendication 6 ou 7,
caractérisé en ce que
le signal de non retour à zéro, éventuellement embrouillé, provoque la modulation d'intensité après un filtrage passe-bas.

9. Système de télécommunication suivant l'une des revendications précédentes,
caractérisé en ce que
le signal (t) porteur est obtenu par multiplication de la fréquence du signal (horloge) de cadence de réception régénéré du dispositif (DU) décentralisé.